# EUROPEAN PATENT SPECIFICATION

(11) **EP 3 462 851 B1**
(45) Date of publication and mention of the grant of the patent: **06.10.2021**
(21) Application number: 17729207.5
(22) Date of filing: 26.05.2017
(51) Int. Cl.: A01K 61/80, A01K 61/65

(54) **SUBMERSIBLE FEEDING, CONTROL AND COMMAND PLATFORM**
TAUCHFÄHIGE ZUFÜHR-, STEUER- UND BEFEHLSPLATTFORM
PLATE-FORME SUBMERSIBLE D'ALIMENTATION, DE CONTRÔLE ET DE COMMANDE

(30) Priority: 31.05.2016 PT 2016109416
(43) Date of publication of application: 10.04.2019
(73) Proprietor: Simões Alves Vieira, António, Mercês 2635-438 Rio De Mouro (PT)
(72) Inventor: Simões Alves Vieira, António, Mercês 2635-438 Rio De Mouro (PT)
(74) Representative: Ferreira Magno, Fernando Antonio
(86) International application number: PCT/PT2017/000012
(87) International publication number: WO 2017/209636

(56) References cited:
- WO-A1-2010/120181
- KR-A- 20120 034 340
- US-A- 6 016 767

## Description

### FIELD OF THE INVENTION

The present invention relates to a submersible platform intended to perform the functions of feeding distribution, production control and command of the operations inherent to the fish farming in submersible cages in open waters, i.e., in locations where adverse ambient conditions can be registered, such as, for example, storms, strong sea agitation, high intensity ocean currents, etc.

### STATE OF THE ART

To improve the control and the productivity of the ration distribution in fish farming in submersible cages there have been developed floating platforms and vessels intended to distribute the feeding to a set of cages. Both floating platforms and vessels have silos for the storage of the rations used and equipments intended to route them to each cage, allowing that the supply be better adjusted to the different needs of each growing population, in terms of feeding period and its distribution rhythm, according to preestablished programs. They also have control devices which are intended to prevent the occurrence of waste, through the possibility of stopping the ration distribution at the first signs of loss of appetite on the part of the fish, which signs are identified by video cameras or by sensors intended to detect the reduction of ration not consumed. These platforms or vessels, in addition to said equipments, also include facilities for the work and rest of the operators.

Although said vessels are able to withstand more severe environmental conditions than the platforms, they have, however, limited ration storage capabilities and they have, in any case, to be taken to the shelter harbour, when the environmental conditions get worse, returning only close to the cages when the environmental conditions so do allow it, that is to say, to be compatible again with the conditions of seaworthiness and with the possibility of surface ration distribution. Often, relatively long periods of time occur wherein the feeding distribution is not realized, which has heavy impacts on the overall productivity of the exploration.

The New Hampshire University (USA) has built a small floating platform capable of withstanding harsher sea agitation conditions than the traditional platforms. Such a platform is not, however, feasible on an industrial scale, since the ratio between its total weight and its ration storage capability is very unfavourable, which is only compatible with small dimension units, storing only a few tonnes of ration, fundamentally intended to be used in experimental programs.

### REFERENCE TO THE RELEVANT BACKGRAND

KR 2012 0034340 A discloses a feeding platform for use in fish farming in submersible cages (20), which platform comprises a vertical central structure having a vertical auger screw distributor, a ration mixing container containing submerged pumps and a function distribution zone, an upper structure having cabins for housing equipment and an outer circulating and mooring space for service vessels, a lower structure having a ration silo and a platform ballasting central chamber, and a mooring arrangement anchored at the bottom of the sea by means of ropes connected to each other at respective junction points. WO 2010/120181 A1 and US 6 016 767 A disclose other feeding platforms for use in fish farming in submersible cages.

### PROBLEM TO BE SOLVED

The occupation of exposed places in open waters is nowadays, all around the world, consensually considered an inevitability for the expansion of aquaculture, in this case also called mariculture, due to the shortage of sheltered locations near the coast. Hence the need for a new generation of platforms intended to make feasible the fish farming in locations subject to adverse environmental conditions, e.g., storms, which are frequent in the open waters, where the fish farming platforms and cages are subject to such adverse environmental conditions, that is to say, for example, to the impact of large undulations, strong winds and/or high intensity sea currents. Therefore, the object of the present invention is to create a feeding distribution, production control and command platform for the operations inherent to fish farming in submersible cages, which has the capability to submerge under adverse environmental conditions, remaining balanced and with a high load capability.

### DESCRIPTION OF THE INVENTION

The feeding, control and command submersible platform according to the invention automatically performs the operations relating to the activities referred to in the table of pre-programmed routines, subject, however, to alteration through decision of the service operator, to whom it reports in real time, via radio, to the headquarters of the company on land.

To be possible to enable the fish farming in offshore spaces where the environmental conditions did not allow the use of the prior art equipments, the platform according to the present invention must be capable of solving two main problems, that is, it must be able to submerge, maintaining the possibility of connection to energy and air power supplies, as well as the communication connections, and remain balanced.

For the resolution of the first problem the platform according to the invention has the ability to submerge in adverse environmental conditions, returning to the surface once such conditions are over. For this purpose, said platform comprises a ballasting and deballasting chamber, which leads the platform to a situation of submersion at the sea or of surface emersion, which makes it possible for said platform to submerge, for example, under heavy weather conditions, staying positioned between ten and thirty five meters deep, position where the impacts resulting from the undulation and/or from the sea currents which occur at the surface are drastically attenuated.

For the resolution of the second problem, the platform according to the invention has the capability to maintain its balance, as the feeding is distributed, due to the existence of an additional ballasting and deballasting arrangement inside each ration storage silo, which allows to maintain its balance, intended to receive seawater to compensate the weight of the ration which is being routed to the associated cages.

The aforementioned problems are solved, in accordance with the present invention described in claim 1, by a feeding, control and command submersible platform intended to perform the functions of feeding distribution, production control and command of the operations inherent to fish farming in submersible cages, which presents a trunk of cylinder or trunk of prism general shape, characterized in that it comprises:
a vertical central structure, which constitutes the core of the axial structure of the platform, and in which there are arranged, at least, a vertical auger screw distributor, and/or another conveyor device, a function distribution zone, a ration arriving container, a ration mixing container;
an upper structure comprising, around the vertical central structure, cabins for housing equipments, ration grain tanks with respective conveying and dosage ration devices, a ballastable circulating corridor, which surrounds the cabins and the grain tanks, and further by an outer circulating and mooring space for service vessels;
a lower structure comprising, around the vertical central structure, several ration silos, a platform ballasting central chamber, at least a solid ballast container, several ration silos comprises several containment vertical grids of the several ballasting and deballasting arrangements; and
a mooring arrangement, comprising several mooring buoys anchored at the bottom of the sea by means of hanging ropes and mooring ropes, said hanging ropes and mooring ropes being connected to each other at respective junction points by ropes, the platform being moored by means of mooring ropes to said junction points, and said platform (10) and said buoys (11) being interconnected by pipes and wirings (17).

In this embodiment of the invention the air supply and the electric power supply can be made by means of pipes and wirings from at least one air intake and at least one electric generator, which may consist of a solar panel, a wind generator or a diesel generator engine, installed in at least one buoy of the mooring arrangement of the platform.

In an alternative embodiment of the invention, the number of silos for ration storage may vary between six and twenty four.

In an embodiment of the invention, the ballasting and deballasting arrangements consist of ration consumption compensating bags made of flexible, impact-resistant and water-proof material.

In an embodiment of the invention, at least one of the platform mooring buoys has a radio or microwave communication antenna connected to the platform by means of wiring.

In a further alternative embodiment of the invention, the conveyor devices and the conveyor and dosage devices are auger screw devices and/or other devices, the other devices being able to be bucket conveyors.

In an embodiment of the invention, the discharge devices of the silos can each discharge one or two silos, varying as a function of the number of silos and the purposes to be attained by the ration distribution function.

The platform, according to the invention, when submerged, in addition to giving continuity to the feeding distribution, continues to perform control and command operating functions relative to cage fish farming, in security conditions, thus ensuring, without disruption, the operability of the system against any adverse environmental conditions. The submersion takes place when this is justified for the safety of said platform.

For this purpose, the platform according to the present invention is moored to an arrangement of buoys fixed at the bottom of the sea and in which there are arranged all the equipments which allow the supply of energy, of air and the communications of the platform with the outside.

The platform has computer equipments which allows to trigger the automatic execution of several functions, namely of programmed routines to control the feeding to the associated cages, the collection of production data images and of several parameters that characterize the environment in which it is processed the fish farming. The service operator, based in the office of the company on land, has the possibility to intervene in real time when it is desired to introduce rectifications, through commands transmitted via radio which overlaps to the programmed routines.

In order to proceed to the submersion of the platform one or more valves controlling the entry of seawater into the ballasting central chamber are opened and, for the platform to return to the surface, that is to say, emerge, compressed air is inflated into said ballasting chamber, by means of which it is carried out the deballasting thereof, which causes the emersion of the platform.

### BRIEF REFERENCE TO THE FIGURES

For a more complete understanding of the present invention reference is now made to the description which follows in conjunction with the accompanying drawings, which refers to an embodiment thereof provided by way of example only and which is not intended to limit the invention.
Fig. 1 shows a perspective view of the feeding, control and command submersible platform according to the embodiment of the present invention.
Fig. 2 shows a plan view of the relative position of the platform and of the mooring buoys.
Fig. 3 shows in an elevation view the relative position of the platform (at the surface and in submersion) and of the mooring buoys.
Fig. 4 shows a side elevational view of the platform of Fig. 1.
Fig. 5 shows a vertical sectional view through plane A-A' passing through the axis of the platform of Fig. 1, shown in Figs. 6 and 7, and shows the internal structure of the platform of Fig. 1.
Fig. 6 shows a horizontal sectional view through the plane B-B' shown in Fig. 4 of the platform of Fig. 1.
Fig. 7 shows a horizontal sectional view through the plane C-C' shown in Fig. 4 of the platform of Fig. 1.
Figs. 8 and 9 shows sectional views through the vertical plane A-A', shown in Figs. 6 and 7, of the platform of Fig. 1.

### DETAILED DESCRIPTION OF AN EMBODIMENT OF THE PRESENT INVENTION

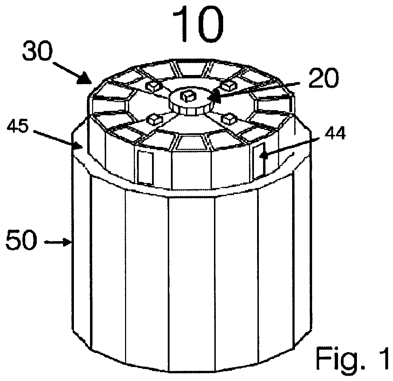

Figs. 1 to 9 represent an embodiment of the present invention, which consists of a feeding, control and command submersible platform, which has sixteen silos for the ration storage.

Fig. 1 shows in a perspective view the feeding, control and command submersible platform (10), which presents a trunk of prism general shape and is composed by:
a vertical central structure (20), it only being visible in this figure its top, which in addition to being the core of the axial structure of the platform houses several equipments;
an upper structure (30) composed by four cabins for housing of the equipments, four ration grain tanks, and by the circulating corridor that surrounds the cabins and the grain tanks, protecting these spaces from the impact of the sea, but which is flooded in submerge situation, said corridor being provided with natural light, when in emersion, through the use of transparent materials in its ceiling, and also of 4 doors (44), being visible in the present figure two doors;
an outer circulating and mooring space (45) for service vessels;
a lower structure (50), being visible part of its sixteen ration silos.

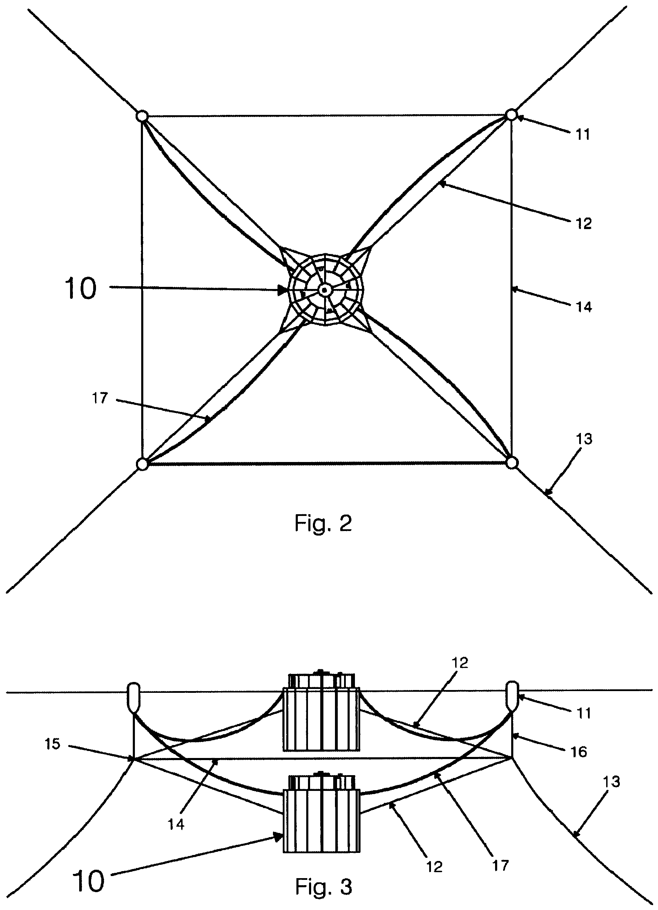

Fig. 2 shows in plan view the relative position of the platform (10) and of the mooring buoys (11), the platform mooring ropes (12), the ropes (13) for mooring of the buoys to the bottom of the sea, the ropes (14) that join between each other the mooring points (15) of the mooring ropes (13) to the ropes (16) hanging from the mooring buoys (visible in Fig. 3).

It further shows the pipes (17) which drive the air from the mooring buoys to the platform and the wirings (17), moored to said pipes, intended to drive the energy from a diesel generator engine set or other energy production systems installed on the buoys and the data transmission wirings from the platform to the radio antenna installed in one of said mooring buoys.

Fig. 3 shows in an elevational view the platform at the surface and in submersion, the moorings (12), pipes and wirings (17) connected to the mooring buoys (11), the ropes (14) which join between each other the mooring points (15) of the mooring ropes to the bottom of the sea (13) to the hanging ropes (16) of the mooring buoys.

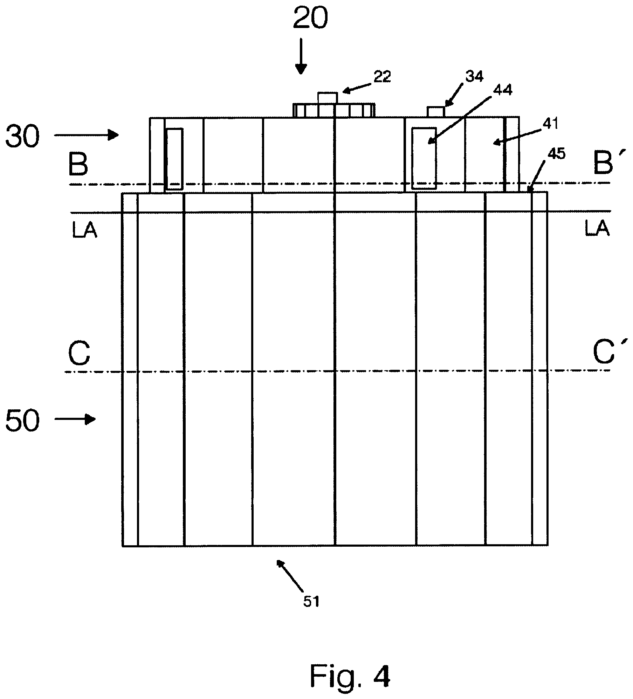

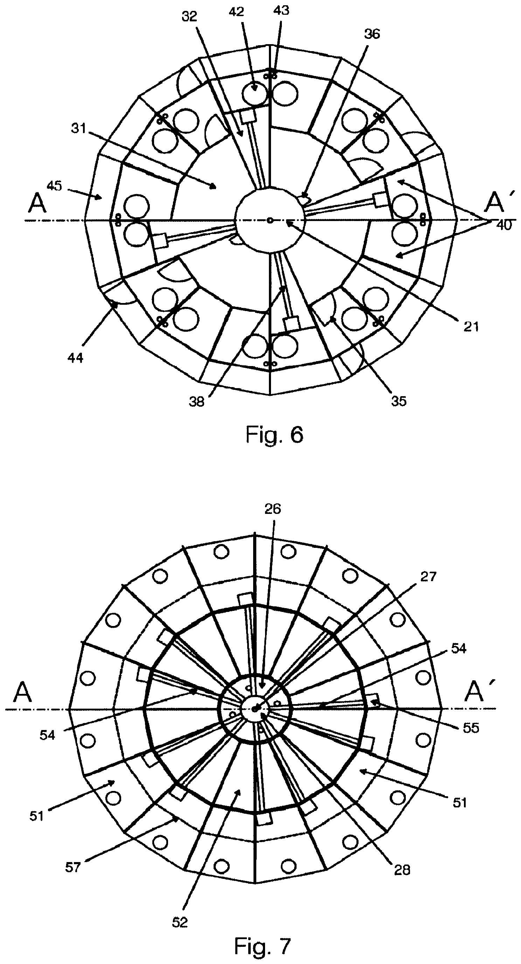

Fig. 4 is a side elevational view of the platform (10), where the position of the buoyancy line (LA) is indicated when said platform is at the surface, in the situation of flat sea, and the position of the section planes B-B' and C-C' which intercept the platform perpendicularly to its vertical axis, which horizontal sectional views are shown in Figs. 6, and 7.

Fig. 4 shows the top of the vertical central structure (20) and the engine (22) of the vertical auger screw distributer intended to rise the ration. In the upper structure of the platform (30) it can be seen the outer wall (41) of the circulating corridor which protects, from the impact of the sea, the cabins that contain equipments and two access doors (44) to the outer mooring space (45) of the service vessels. At the top it can be seen the engine (34) of the auger screw distributor which drives the ration to the corresponding grain tank. The figure further shows the lower structure (50) where eight of the sixteen ration storage silos (51) are visible.

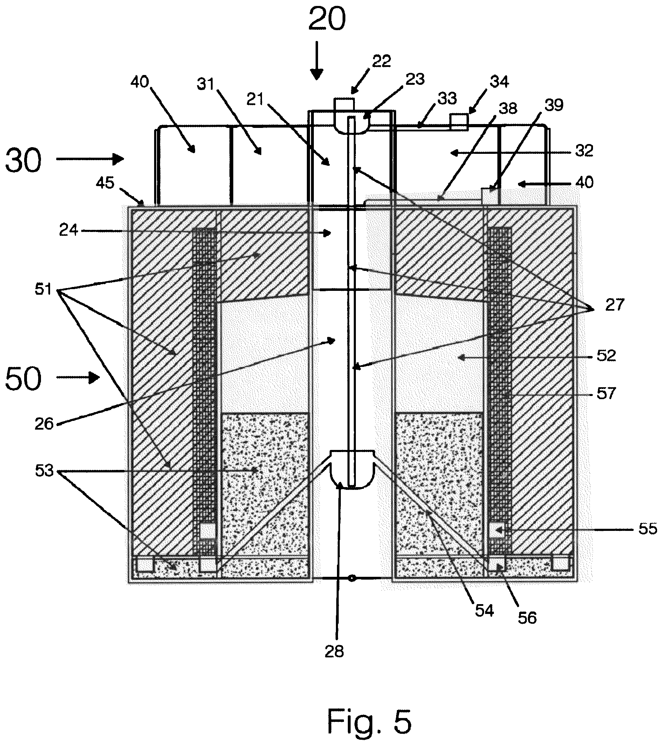

Fig. 5 shows the section through the vertical plane A-A' of the platform (10), which position is shown in Figs. 6 and 7. It is shown the vertical central structure (20), around which there are positioned the upper structure (30), above the horizontal plane defined by the upper bases of the ration storage silos and the lower structure (50) below said horizontal plane, said structure (50) being, in the emerged position of the platform, almost entirely below the water line (LA).

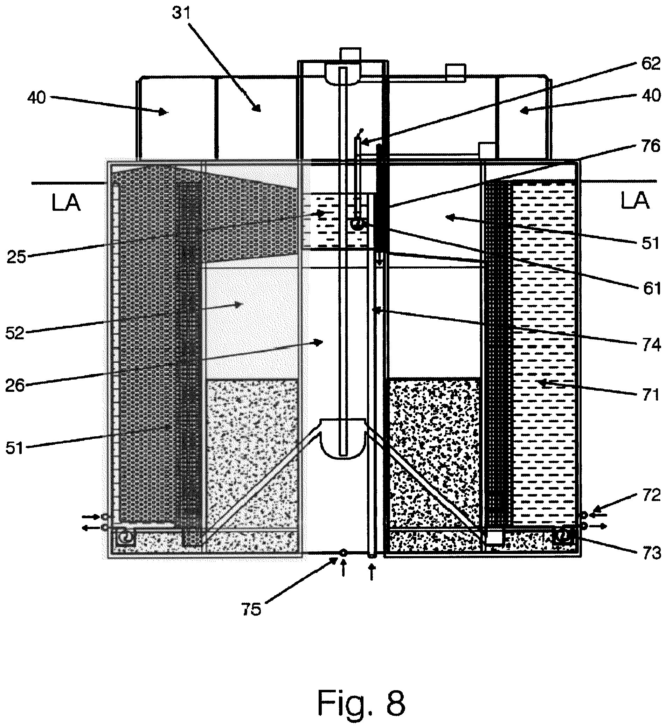

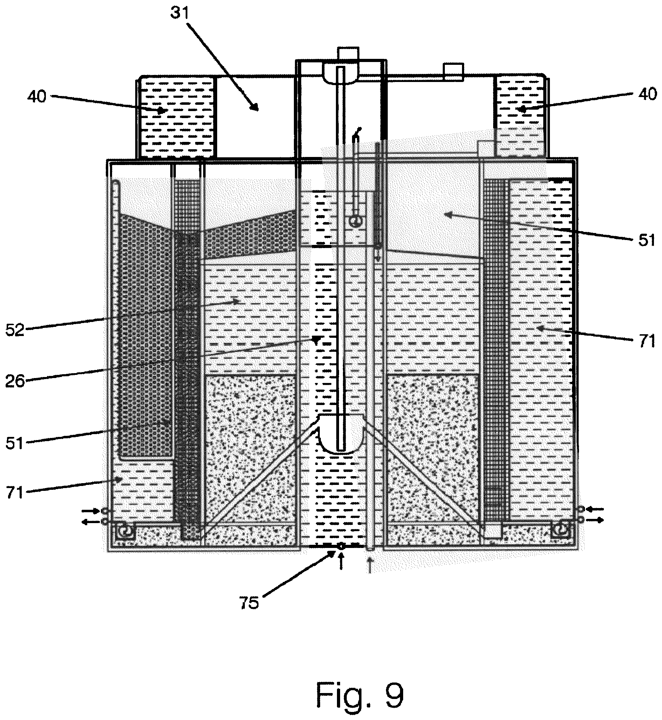

The vertical central structure (20) comprises, from top to bottom, a function distribution zone (21), to which follows in an immediately lower position, the ration mixing container (24) where the submerged pumps (61 visible in Figs. 8 and 9) are located, intended to boost the water which drives the ration to the cages and, in the lower position, the space (26) forming part of the ballasting central chamber of the platform. In the space (21) it is seen the upper segment of the ration rising vertical auger screw distributor (27), the ration arriving container (23), the container which contains the engine (22) of said ration rising system, the starting segment (33) of the auger screw distributor which conveys the ration into the grain tank (32) and the end segment (38) of the auger screw conveyors which process the dosage of the ration, convoying it to the ration mixing container with the seawater. In the ration mixing container (24), it is seen the intermediate segment of the ration rising vertical auger screw distributor (27), the remaining equipment occupying this ration mixing container (24) shown in Figs. 8 and 9. In the space (26) there are shown the lower segment of the ration rising vertical auger screw distributor (27), the ration loading container (28) and the end segments of the auger screw conveyors (54) which convey the ration from the silos to the container (28).

In the upper structure (30) there are shown in this section a cabin (31), the ballastable circulating corridor (40) giving access to the cabins, the ration grain tank (32), with the ration conveying auger screw distributor (33) to said grain tank and its engine (34) and, further, the ration dosage auger screw conveyors (38) which drive it from the grain container (32) to the ration mixing container to be mixed with seawater and their engines (39). It is also shown in the peripheral position the mooring outer circulating space (45) for service vessels.

In the lower structure (50) there are shown in the present section the ration storage silos (51), the free space integrated in the ballasting central chamber (52), the gravel ballasting container (53), the auger screw distributers (54) for moving the ration, which connect the silos to the ration loading container (28), the respective engines (55) and the loading containers (56) of the auger screw distributers (54) and the containment vertical grids (57) of the water bag (71 visible in Figs. 8 and 9) intended to compensate the weight of the consumed ration

Fig. 6 shows the horizontal section of the platform (10) through plane B-B' which position is shown in Fig. 4. It is shown the space occupied by the function distribution area (21), surrounded by four cabins (31) intended to house equipments (not represented), with the respective access doors (35), the two access doors (36) to the function distribution area, and, by the grain tanks (32) adjacent relative to each cabin, existing, at the base of each grain tank, auger screw convoying and dosage devices (38) intended to dose the ration to distribute. In the ballastable circulating corridor (40) there are arranged intake tight trapdoors on each silo (42) and ration loading mouths (43). The doors (44) provide the passage between the ballastable circulating corridor and the mooring outer circulating space (45) for service vessels.

Fig. 7 shows the horizontal section of the platform (10) through the plane C-C' which position is shown in Fig. 4. It is shown the space (26) in which central position it is located the auger screw distributor (27) intended to rise the ration and, in a projection, the loading container thereof (28), in addition to the pipes (74 visible in Fig. 8), intended to supply with seawater the ration mixing container (24), located at an upper level. The space (26), at the section level, is surrounded by the gravel ballasting container (53), which material is not represented in order to show the auger screw conveyors (54) which are intended to move the ration from the silos with destination to the loading container (28). A further horizontal section more above would allow to see, in the same position, the ballasting central chamber (52) of the platform visible in Fig. 5. In the periphery of the present figure there are shown in section the ration silos (51) and, in its interior, the vertical grids (57), the places where there are located the engines (55) of the auger screw conveyors (54) which empty the silos and the places where there are installed the submerged pumps intended to empty the seawater accumulated in the compensating bags (71 visible in Fig. 8) of the weight of the consumed ration. With respect to ration movement, each one of the eight of the auger screw conveyors (54) discharges only one silo, unloading each one of the remaining two silos in the adjacent position.

Figs. 8 and 9 show the section through the vertical plane A-A' of the platform (10) which position is indicated in Figs. 6 and 7, with the aim to show, in addition to the equipments not mentioned in the previous figures, the different filling situations of the silos with ration and/or the different degrees of filling with water of the compensating bag of the weight of consumed ration (71) and, further, the air filled ballasting central chamber (platform floating at the surface) shown in Fig. 8, or filled with water (submerged platform) shown in Fig. 9.

Fig. 8 shows the ration mixing container (24) where it is made the mixing of the ration with the seawater, in order to be boosted by the submerged pump (61), through the pipes (62), to the cabins (31), where there are devices (not represented) intended to its routing, through submerged pipes to the cages. The pipe (74) is intended to supply with seawater the ration mixing container (24), having a safety valve (not represented) intended to prevent that the water in the container from exceeding a predetermined operating level. Fig. 8 further shows the ration consumption compensating bags (71) made of flexible, impact-resistant and water-impermeable plastic material. The inlet of the seawater in said compensating bags (71) is controlled by the valves (72) whose operation allows to regulate the necessary quantity to compensate the weight of the ration that is being consumed and, therefore, maintain the balance of the platform. The submerged pumps (73) are intended to empty said bags (71) in order to allow the filling of the silos with the ration. At the present section the ballasting central chamber (26 and 52) is filled with air, whereby the platform is floating at the surface. The control of the filling with water to ballast the ballasting central chamber is made by the valve (75) and, the air inlet for expelling the water from that space (26, 52), in order for the platform (10) to return to the surface, is made through the pipe (76) connected to an air compressor installed in a cabin (31). Fig. 8 further shows, on the left side of the drawing, the silo (51) filled with ration and the corresponding empty ration consumption compensating bag (71), which situation is reversed in another silo (51) located on the right side of the drawing. The ballasting central chamber of the platform (26 and 52) is filled with air, whereby the platform is at the surface with the indicated position of the water line (LA).

Fig. 9 shows the section through the vertical plane A-A' of the platform (10) which position is shown in Figs. 6 and 7. It is shown, in particular, the situation of the platform in submersion with the ballasting central chamber (52 and 26) filled with water, as well as the flooded circulating corridor (40).

The platform (10), which normally operates at the surface, has components and equipments, whose direct or indirect relationship with the submersion and immersion capability of the platform (10) is explained in the following.

In Figs. 5, 6, 8 and 9 there is represented the function distribution area (21) which constitutes a passage space for wirings and pipes.

The wirings (not represented) are intended for energy transmission, data transmission and to convoy command actions between the cabin (31) (where the command computerized central of all routine automatic operations is located) and the commanded equipments, located in several places of the platform, namely in the remaining cabins (31).

The air conveying pipes (76) leave the cabin (31) (where the air compressor is located) and goes to the ballasting central chamber (26 and 52), to promote the expulsion of the water and allow the return of the platform to the surface.

In the two containers (25) where it is processed the mixing of the ration with the seawater there are two submerged pumps (61), one in each container, which boost the water through the pipes (62) into two cabins (31), where are located the equipments (not represented) intended to route the ration to each one of the associated cages. In parallel with the pipes intended to distribute the ration there flows from those cabins (31) other compressed air conveying pipes (not represented) intended for the ballasting spaces of each cage to allow their emersion after the end of the adverse environmental conditions. There are also pipes (74), intended for capturing seawater for the supply of said ration mixing container (24), which pipes are provided with water intake control valves (not represented), which prevent seawater from rising, in each ration mixing container (24), above a predetermined safety level.

FIGS. 5, 6, 8 and 9 shows the upper structure (30) comprising four cabins (31) intended to house equipments (not represented). One of the cabins contains the control computer equipment of the routine operations of the platform, two cabins, located in opposite positions, contains the routing devices of the water pipes with mixed ration and the devices of the compressed air pipes for each of the associated cages, and the fourth cabin contains the air compressor for the deballasting processes of the platform and of the associated cages. The cabins (31) and the adjacent ration grain tanks (32) are surrounded by a corridor (40) which protects them from the impact of the sea, but which is flooded during the submersion process. There is also a mooring outer circulating space (45) for service vessels. All the cabins have an access door (35) to the ballastable circulating corridor (40), which doors are tight to the water that fills the corridor, when the platform is submerged. Two of the cabins (31) have access doors (36) to the function distribution area (21). The ballastable circulating corridor (40) is provided with a cover in transparent material to allow the natural light access to that working area when the platform is at the surface.

Operation: The equipments housed in the cabins are intended to drive the operating routines of the platform, both at the surface and in submersion, namely the ration distribution to the outside of the platform, the collection and treatment of production parameters, and to allow command interventions that overlap to the established routines, whenever the operator, installed in the company's office, so deems it to be necessary, in dialogue, via radio, with the computer system installed on the platform. The ballastable circulating corridor (40) is intended to allow the access to the cabins and to the silos, when the platform is at the surface and sheltered from the entrance of seawater. For this purpose, the entrance into this corridor is made using the door located in a more sheltered position with respect to the direction of the waves and of the wind in each moment, in front of which the service vessel will be moored.

FIGS. 5, 7, 8 and 9 show the lower structure (50) of the platform (10) comprising, around the vertical central structure (20), sixteen silos (51), in the shape of trapezoidal section prisms. The vertical walls of the silos located in a position closest to the axis of the platform restrict the ballasting central chamber (26 and 52) and have, inferiorly, in an attached position, the gravel ballasting container (53).

Each silo has in the upper base an inlet tight trapdoor (42) intended to allow the inspection of the inside thereof, and a ration supply mouthpiece (43).

Each silo contains in its interior a compensating bag (71) of flexible, impact-resistant and water-impermeable plastic material, intended to be filled with seawater as the ration is being consumed, thereby maintaining the balance of the platform. For this purpose, the bag communicates with the outside through a tube for entrance of the seawater, which is controlled by a valve (72), whose operation allows to adjust the volume of the incoming water in order to compensate the weight of the ration which is being consumed. In order to allow the silo to be filled with ration, the water existing in the compensating bag (71) is previously launched to the outside, through the operation of a submerged pump (73) located in its interior. The compensating bag adheres to the walls of the silo with which it contacts and is restrained by a vertical grid (57) which defines its volume as it fills with water.

The platform is connected by pipes and wirings to the mooring buoys from where it receives air and electric energy for the operation of the equipments thereof, as well as for the radio communication with the company's headquarters on land.

When the platform (10) is at the surface, the ballasting central chamber (26 and 52) is filled with air. In the face of a storm threat, the valve (75) is opened, allowing water to enter which causes the platform to submerge. After the storm has passed, in order for the platform to return to the surface, an air compressor is activated which, through the pipes (76), promotes the deballasting through the action of the air, of the existing water in the ballasting central chamber.

When the sinking of the platform is effected, the circulating corridor (40) is flooded as the platform sinks, through the entrance of the seawater through the valves located at the level of the corridor floor (not represented) and the air outlet through the valves located close to the corridor ceiling (not represented). In the immersion process, the water and air flows have opposite directions, accompanying the rising of the position of the platform relative to the water line.

The flooding of the circulating corridor (40) and the compensation, within each silo, of the weight of consumed ration through the corresponding filling with seawater of the compensating bag (71), allows the volume of the ballasting central chamber (26 and 52) to be minimized, which corresponds to the dimension of the closed volumes located above the water line (LA) when the platform floats at the surface: the function distribution area (21), the equipment cabins (31), the grain tanks (32) in adjacent position and the upper fraction of the silos (51). Without recourse to these embodiments, the ballasting central chamber would have such a large volume that would render the invention unviable.

The present invention covers all possible combinations of the embodiment and the alternative embodiments mentioned herein within the scope of the appended claims.

## Claims

1. A feeding, control and command submersible platform (10) intended to perform the functions of feeding distribution, control of production and command of operations inherent to fish farming in submersible cages, which presents a trunk of cylinder or trunk of prism general shape, said platform comprising:
a vertical central structure (20), which constitutes an axial core structure of the platform (10), and in which there are arranged, at least a vertical auger screw distributor (27, 22) or at least another conveyor device, a function distribution zone (21), a ration arriving container (23), a ration mixing container (24) in the interior of which is mixed the ration with the seawater, said ration mixing container (24) containing submerged pumps (61) intended to boost the water which drives the ration to the cages, said vertical central structure (20) further comprising a space (26) which is part of a ballasting central chamber (26, 52), a ration loading container (28);
an upper structure (30) comprising, around the vertical central structure (20), cabins (31) for housing equipments, ration grain tanks (32) with respective conveying (33, 34) and dosage screw conveyor devices (38, 39), a ballastable circulating corridor (40), which surrounds the cabins (31) and the grain tanks (32), and an outer circulating and mooring space (45) for service vessels;
the vertical central structure (20) comprising, from top to bottom, a function distribution zone (21), to which follows in an immediately lower position, the ration mixing container (24) and, in the lower position, the space (26), in which are located a lower segment of the vertical auger screw conveyor (27), the ration loading container (28) and end segments of auger screw conveyors (54) which convey the ration from several ration silos (51) to the ration loading container (28);
a lower structure (50) comprising, around the vertical central structure (20), the several ration silos (51), the ballasting central chamber (52), at least a solid ballast container (53), several loading containers (56), wherein the several ration silos (51) comprise several containment vertical grids (57) of several ballasting and deballasting arrangements comprising ration consumption compensating bags (71) which can be emptied by pumps (73) disposed inside the ration storage silos (51); and
a mooring arrangement, comprising several mooring buoys (11) anchored at the bottom of the sea by means of hanging ropes (16) and mooring ropes (13), said hanging ropes (16) and mooring ropes (13) being connected to each other at respective junction points (15) by ropes (14), the platform (10) being moored by means of mooring ropes (12) to said junction points (15), and said platform (10) and said buoys (11) being interconnected by pipes and wirings (17) for supplying air and electric power from said buoys (11) to said platform (10).

2. A feeding, control and command submersible platform (10) according to claim 1, **characterized in that** the number of silos (51) for ration storage vary between six and twenty four.

3. A feeding, control and command submersible platform (10) according to claim 1, **characterized in that** the ration consumption compensating bags (71) are made of flexible, impact-resistant and water-proof material.

4. A feeding, control and command submersible platform (10) according to claim 1, **characterized in that** the air supply and the electric power supply is made by means of the pipes and wirings (17) from at least one air intake and at least one electric generator, which may consist of a solar panel, a wind generator, or a diesel generator engine, installed in at least one buoy (11) of the mooring arrangement of the platform (10).

5. A feeding, control and command submersible platform (10) according to claim 1, **characterized in that** in at least one of the platform mooring buoys (11) there is a radio or microwave communication antenna.

6. A feeding, control and command submersible platform (10) according to claim 1, **characterized in that** the conveyor devices are auger screw devices or other devices, the other devices being bucket conveyors.

## Patentansprüche

1. Tauchfähige Zuführ-, Steuer- und Befehlsplattform (10), die dazu bestimmt ist, die Funktionen der Fütterungsverteilung, der Produktionssteuerung und der Steuerung von Vorgängen auszuführen, die der Fischzucht in Tauchkäfigen eigen sind, die einen zylindrischen oder prismatischen Stamm mit allgemeiner Form aufweist, wobei die Plattform umfasst:
eine vertikale Zentralstruktur (20), die eine axiale Kernstruktur der Plattform (10) bildet, und in der zumindest ein vertikaler Schneckenverteiler (27, 22) oder zumindest eine andere Fördereinrichtung, eine Funktionsverteilungszone angeordnet sind (21), einen Rationsankunftsbehälter (23), einen Rationsmischbehälter (24), in dessen Inneren die Ration mit dem Meerwasser gemischt wird, wobei der Rationsmischbehälter (24) Tauchpumpen (61) enthält, die das Wasser fördern sollen welches die Ration zu den Käfigen treibt, wobei die vertikale Zentralstruktur (20) weiterhin einen Raum (26) umfasst, der Teil einer Ballastierungs-Zentralkammer (26, 52) ist, einen Rationsladebehälter (28);
eine obere Struktur (30), die um die vertikale Mittelstruktur (20) herum Kabinen (31) zur Unterbringung von Ausrüstungen, Rationskorntanks (32) mit entsprechenden Förder- (33, 34) und Dosierschneckenfördervorrichtungen (38, 39) umfasst, einen ballastierbaren Umlaufkorridor (40), der die Kabinen (31) und die Korntanks (32) umgibt, und einen äußeren Umlauf- und Festmacherraum (45) für Serviceschiffe;
wobei die vertikale Zentralstruktur (20) von oben nach unten eine Funktionsverteilungszone (21) umfasst, an die sich in einer unmittelbar unteren Position der Rationsmischbehälter (24) und in der unteren Position der Raum (26) anschließt. , in dem sich ein unteres Segment des vertikalen Schneckenförderers (27), der Rationsladebehälter (28) und Endsegmente von Schneckenförderern (54) befinden, die die Ration aus mehreren Rationssilos (51) zum Rationsladen befördern Behälter (28);
eine untere Struktur (50), die um die vertikale Zentralstruktur (20) herum die mehreren Rationssilos (51) umfasst, die Ballastierungs-Zentralkammer (52), mindestens einen festen Ballastbehälter (53), mehrere 30 Ladebehälter (56). , wobei die mehreren Rationssilos (51) mehrere vertikale Rückhaltegitter (57) mehrerer Ballastierungs- und Entballastierungsanordnungen umfassen, die Rationsverbrauchsausgleichsbeutel (71) umfassen, die durch Pumpen (73) entleert werden können, die innerhalb der Rationsspeichersilos (51) angeordnet sind; und
eine Festmacheranordnung, bestehend aus mehreren Festmacherbojen (11), die mittels Hängeseilen (16) und Festmacherseilen (13) am Meeresgrund (35) verankert sind, wobei die Hängeseile (16) und Festmacherseile (13) miteinander verbunden sind an jeweiligen Verbindungspunkten (15) durch Seile (14) miteinander verbunden, wobei die Plattform (10) mittels Festmacherseilen (12) an den Verbindungspunkten (15) festgemacht ist und die Plattform (10) und die Bojen (11) durch Rohre und Leitungen (17) verbunden ist, um Luft und elektrische Energie von den Bojen (II) zu der Plattform (10) zu liefern.

2. Tauchfähige Zuführ-, Steuer- und Befehlsplattform (10) nach Anspruch 1, **dadurch gekennzeichnet, dass** die Anzahl der Silos (51) zur Rationenlagerung zwischen sechs und vierundzwanzig variiert

3. Tauchfähige Zuführ-, Steuer- und Befehlsplattform (10) nach Anspruch 1, **dadurch gekennzeichnet, dass** die Rationenverbrauchsausgleichsbeutel (71) aus flexiblem, schlagfestem und wasserdichtem Material bestehen.

4. Tauchfähige Zuführ-, Steuer- und Befehlsplattform (10) nach Anspruch 1, **dadurch gekennzeichnet, dass** die Luftversorgung und die elektrische Energieversorgung mittels der Rohre und Leitungen (17) aus mindestens einem Lufteinlass und mindestens einen elektrischen Generator, der aus einem Sonnenkollektor, einem Windgenerator oder einem Dieselgeneratormotor bestehen kann, der in mindestens einer Boje (11) der Festmacheranordnung der Plattform (10) installiert ist.

5. Tauchfähige Zuführ-, Steuer- und Befehlsplattform (10) nach Anspruch 1, **dadurch gekennzeichnet, dass** sich in mindestens einer der Plattform-Anlegebojen (11) eine Funk-oder Mikrowellenkommunikationsantenne befindet.

6. Tauchfähige Zuführ-, Steuer- und Befehlsplattform (10) nach Anspruch 1, **dadurch gekennzeichnet, dass** die Fördervorrichtungen Schneckenförderer oder andere Vorrichtungen sind, wobei die anderen Vorrichtungen Becherwerke sind.

## Revendications

1. Plate-forme submersible d'alimentation, de contrôle et de commande (10) destinée à assurer les fonctions de distribution d'alimentation, de contrôle de production et de commande d'opérations inhérentes à la pisciculture en cages submersibles, qui présente un tronc de cylindre ou tronc de prisme de forme générale, ladite plate-forme comprenant:
une structure centrale verticale (20), qui constitue une structure centrale axiale de la plate-forme (10), et dans laquelle sont disposés, au moins un distributeur vertical à vis sans fin (27, 22) ou au moins un autre dispositif convoyeur, une zone de répartition de fonctions (21), un conteneur d'arrivée de rations (23), un conteneur de mélange de rations (24) à l'intérieur duquel est mélangée la ration avec l'eau de mer, ledit conteneur de mélange de rations (24) contenant des pompes immergées (61) destinées à surpresser l'eau qui conduit la ration vers les cages, ladite structure centrale verticale (20) comprenant en outre un espace (26) qui fait partie d'une chambre centrale de ballast (26, 52), un conteneur de chargement de ration (28);
une structure supérieure (30) comprenant, autour de la structure centrale verticale (20), des cabines (31) de logement d'équipements, des trémies à grains (32) avec respectivement des dispositifs de convoyage (33, 34) et de vis de dosage (38, 39), un couloir de circulation ballastable (40), qui entoure les cabines (31) et les réservoirs à grains (32), et un espace de circulation et d'amarrage extérieur (45) pour les navires de service;
la structure centrale verticale (20) comprenant, de haut en bas, une zone de distribution de fonctions (21), à laquelle succède en position immédiatement inférieure, le récipient de mélange de rations (24) et, en position inférieure, l'espace (26) , dans lequel se trouvent un segment inférieur de la vis sans fin verticale (27), le conteneur de chargement de rations (28) et des segments d'extrémité de vis sans fin (54) qui transportent la ration de plusieurs silos de rations (51) vers le conteneur de chargement de rations (28);
une structure inférieure (50) comprenant, autour de la structure centrale verticale (20), les plusieurs silos de rations (51), la chambre centrale de ballast (52), au moins un conteneur à ballast solide (53), plusieurs conteneurs de chargement (56), dans lesquels les plusieurs silos de rations (51) comprennent plusieurs grilles verticales de confinement (57) de plusieurs dispositifs de ballastage et de déballastage comprenant des sacs de compensation de consommation de rations (71) qui peuvent être vidés par des pompes (73) disposées à l'intérieur des silos de stockage des rations (51); et
un dispositif d'amarrage, comprenant plusieurs bouées d'amarrage (11) ancrées au fond (35) de la mer au moyen de cordes de suspension (16) et de cordes d'amarrage (13), lesdites cordes de suspension (16) et cordes d'amarrage (13) étant reliées les uns aux autres aux points de jonction respectifs (15) par des cordes (14), la plate-forme (10) étant amarrée au moyen de cordes d'amarrage (12) auxdits points de jonction (15), et ladite plate-forme (10) et lesdites bouées (11) étant interconnectés par des tuyaux et des câblages (17) pour fournir de l'air et de l'énergie électrique depuis lesdites bouées (II) à ladite plate-forme (10).

2. Plate-forme submersible d'alimentation, de contrôle et de commande (10) selon la revendication 1, **caractérisée en ce que** le nombre de silos de stockage des rations (51) varie entre six et vingt-quatre.

3. Plate-forme submersible d'alimentation, de contrôle et de commande (10) selon la revendication 1, **caractérisée en ce que** les sacs de compensation de consommation de ration (71) sont en matériau souple, résistant aux chocs et étanche à l'eau.

4. Plate-forme submersible d'alimentation, de contrôle et de commande (10) selon la revendication 1, **caractérisée en ce que** l'alimentation en air et l'alimentation électrique se font au moyen des canalisations et câblages (17) à partir d'au moins une prise d'air et d'au moins un générateur électrique, qui peut être constitué d'un panneau solaire, d'une éolienne ou d'un moteur diesel, installé dans au moins une bouée (11) du dispositif d'amarrage de la plate-forme (10).

5. Plate-forme submersible d'alimentation, de contrôle et de commande (10) selon la revendication 1, **caractérisée en ce que** dans au moins une des bouées d'amarrage (11) de la plate-forme se trouve une antenne de communication radio ou hyperfréquence.

6. Plate-forme submersible d'alimentation, de contrôle et de commande (10) selon la revendication 1, **caractérisée en ce que** les dispositifs de convoyage sont des dispositifs à vis sans fin ou d'autres dispositifs, les autres dispositifs étant des convoyeurs à godets.
